# FASCICULE DE BREVET EUROPEEN

(11) **EP 1 100 672 B1**
(45) Date de publication et mention de la délivrance du brevet: **02.04.2003**
(21) Numéro de dépôt: 99932934.5
(22) Date de dépôt: 21.07.1999
(51) Int. Cl.: B29C 47/22

(54) **DISPOSITIF DE REGULATION DE L'EPAISSEUR D'UNE PARAISON DANS UNE MACHINE D'EXTRUSION-SOUFFLAGE**
VORRICHTUNG ZUR REGELUNG DER DICKE EINES VORFORMLINGS IN EINER EXTRUSIONSBLASFORMMASCHINE
DEVICE FOR ADJUSTING THE THICKNESS OF A PREFORM IN AN EXTRUSION BLOW-MOULDING MACHINE

(30) Priorité: 24.07.1998 FR 9809586
(43) Date de publication de la demande: 23.05.2001
(73) Titulaire: SIDEL S.A., 76053 Le Havre Cédex (FR)
(72) Inventeur: DEROUAULT, Philippe, 76053 Le Havre Cedex (FR); DOUDEMENT, Denis, 76053 Le Havre Cedex (FR)
(74) Mandataire: Siloret, Patrick
(86) Numéro de dépôt international: FR9901787
(87) Numéro de publication internationale: WO00005054

(56) Documents cités:
- DE-A- 2 446 920
- DE-A- 19 528 752
- US-A- 5 253 992
- US-A- 5 645 873

## Description

L'invention concerne des perfectionnements aux dispositifs de régulation de l'épaisseur des paraisons dans les machines de fabrication de corps creux en matière plastique par extrusion, puis soufflage, de paraisons tubulaires. Elle s'applique tout particulièrement, quoique non exclusivement, à la régulation de l'épaisseur des paraisons dans les machines de fabrication de récipients en matière plastique (PVC, PEHD...) utilisant la technologie de l'extrusion-soufflage. Elle concerne également une machine équipée d'un tel dispositif.

Pour fabriquer un corps creux en matière plastique, tel qu'un récipient, par extrusion-soufflage, une paraison, en forme de tube, est délivrée par une tête d'extrusion au-dessus d'un moule qui est ouvert au moment de l'introduction de la paraison et fermé au moment de la finition, par soufflage, de l'objet.

On connaît des installations dans lesquelles les moules sont portés par un carrousel animé d'un mouvement de rotation continu autour d'un axe horizontal. La tête d'extrusion est alors en partie haute de la machine qui est agencée pour que l'introduction d'une paraison dans un moule s'effectue lorsque ce dernier se trouve en vis-à-vis de la tête, de sorte que la paraison est introduite dans un moule lorsque celui-ci est en partie haute du carrousel.

Dans d'autres installations, les moules se déplacent sur un plan sensiblement horizontal entre une zone d'introduction des paraisons et une zone de soufflage.

Parmi les installations d'extrusion-soufflage sus mentionnées, on en connaît qui comportent des dispositifs d'extrusion avec des systèmes de régulation de l'épaisseur des paraisons, en vue d'obtenir des corps creux (récipients ou autres) dans lesquels les parois possèdent une épaisseur approximativement contrôlée. L'invention concerne des installations de ce type.

De tels dispositifs connus comportent une tête d'extrusion comprenant, entre autres, deux parties mobiles axialement relativement l'une par rapport à l'autre.

Une première partie constitue une filière extérieure et se présente sous la forme d'un tube creux ; la seconde partie est un noyau cylindrique dont l'axe longitudinal est confondu avec celui du tube.

La section du tube et/ou celle du noyau n'est pas constante, de sorte qu'en déplaçant le noyau relativement au tube, la largeur de l'espace annulaires qui détermine l'épaisseur de la paraison, au débouché de la filière, varie. Donc, en faisant varier la position relative longitudinale (ou axiale) du noyau et de la filière pendant que la paraison est extrudée, on en fait varier l'épaisseur.

Toutefois il est connu que, pour que les parois des corps creux soient suffisamment résistantes, il est nécessaire que la matière soit introduite dans la tête d'extrusion avec une pression suffisamment élevée pour être répartie de façon voulue sur toute la périphérie de la paraison et, donc, sur le corps creux final.

Ainsi, il est courant que, pour la fabrication de corps creux, tels que des bidons de plusieurs litres (5 litres par exemple), des pressions comprises entre 80 et 180 bars, voire plus, soient couramment mises en oeuvre.

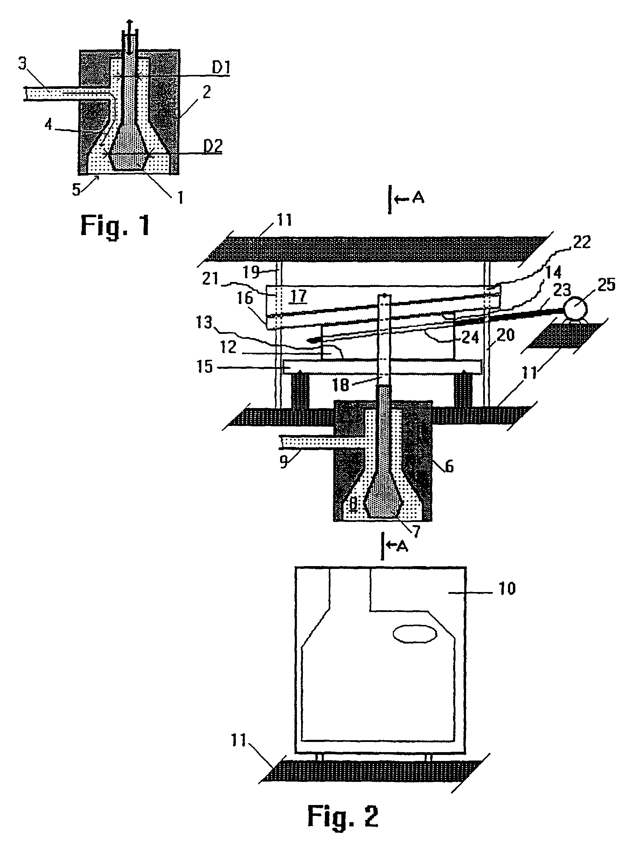

Par exemple, si on considère la tête d'extrusion de la figure 1, dite de type divergent, dans laquelle :
- un noyau 1 est déplaçable axialement relativement à une filière 2 et la matière 3 est introduite dans le sens de la flèche 4 dans l'espace annulaire compris entre le noyau et la filière ;
dans laquelle le noyau présente une section de plus petit diamètre D1 entre l'arrivée de la matière et la sortie 5 de la tête, et le noyau présente par ailleurs une section de plus grand diamètre D2 entre la section susmentionnée de petit diamètre et la sortie 5 de la tête :
alors, dans un tel type de tête, la charge C supportée par le noyau est déterminée par la formule suivante : C = P x Sp, dans laquelle P est la pression de la matière dans la tête et Sp la section annulaire projetée du noyau, c'est-à-dire celle délimitée par les diamètres D1 et D2 [Sp = (D2/2 - D1/2)2 * π].

A titre d'exemple, pour un noyau dans lequel D1 = 11 cm et D2 = 20 cm, alors, la charge supportée par le noyau est d'environ 28 000 DaN lorsque la pression dans la filière est de 130 bars (la section projetée Sp est d'environ 220 cm2 dans ce cas). En d'autres termes, les moyens d'actionnement axial du noyau doivent être en mesure de maintenir une telle charge.

Le même noyau, sous une pression de 80 bars, serait soumis à une charge de 17 500 DaN.

La charge exercée sur le noyau est dirigée dans le sens d'écoulement du fluide et tend à repousser le noyau dans le même sens que le fluide.

Il existe aussi des têtes de type convergent, dans lesquelles les dispositions relatives des sections de petit et de grand diamètre sont inversées par rapport à celles dans les têtes de type divergent.

Il convient donc que les moyens d'actionnement du noyau relativement à la filière soient en mesure de résister à de telles charges et que la structure de l'installation soit dimensionnée pour résister aux contraintes générées par les charges en question.

A cet effet, il a été envisagé des installations dans lesquelles les moyens d'actionnement sont constitués par des vérins hydrauliques.

De tels types d'installations présentent néanmoins des inconvénients.

Tout d'abord, en raison des charges qu'ils doivent entraîner, dont un ordre de grandeur a été donné auparavant, il faut employer des vérins encombrants. A titre d'exemple, pour entraîner une charge de 30 000 DaN, il faut un vérin de 16 cm de diamètre, alimenté sous une pression de 150 bars. La pompe hydraulique d'actionnement des vérins doit être dimensionnée en conséquence.

Ensuite, il arrive parfois des fuites de fluide hydraulique, souillant la machine. Puisque les vérins sont disposés au-dessus de la filière, de telles fuites vont directement souiller les moules.

Par ailleurs, la commande et l'asservissement des vérins sont des opérations délicates. Pendant la formation de la paraison destinée à la fabrication d'un corps creux, il peut être nécessaire de provoquer un mouvement relatif du noyau par rapport à la filière plusieurs dizaines de fois. Une cinquantaine de mouvements lors de la formation d'une paraison n'est pas exceptionnelle. Ceci correspond donc à cinq mouvements par seconde pour un cycle de dix secondes. Or, en raison de l'importance des efforts à vaincre et de la fréquence relativement élevée des mouvements, un positionnement précis du noyau est difficile à obtenir, d'autant plus que les variations de mouvement souhaitées sont parfois de quelques millimètres seulement. Il en résulte quelques difficultés à bien contrôler la répartition de la matière sur la paraison et donc sur le corps creux final.

On a remédié partiellement aux inconvénients sus mentionnés en proposant des machines dans lesquelles le mouvement relatif entre la filière et le noyau est provoqué à l'aide d'un moteur rotatif. Les risques de pollution inhérents à l'emploi de moyens hydrauliques n'existent plus, et le positionnement est facilité. Le document DE-A-19528752, sur lequel repose le préambule de la revendication 1, présente une telle machine. Toutefois, dans cette machine, comme dans d'autres machines connues, il est prévu des moyens réducteurs entre le moteur et la partie mobile, afin d'éviter d'utiliser un moteur de puissance trop élevée. Les moyens réducteurs entraînent une vis sans fin qui, elle-même, entraîne directement la pièce mobile (ici la filière). Toutefois, l'ensemble des efforts d'entraînement sont directement supportés par la vis sans fin, par un palier la liant au chassis et par un écrou d'entraînement lié à la pièce mobile. La vis, le palier et l'écrou doivent être dimensionnés de façon à supporter les efforts ; en outre, ce sont des pièces sensibles à l'usure, (les efforts sont répartis sur des petites surfaces) de sorte qu'à terme, la précision du positionnement risque d'être altérée.

L'invention a pour but de remédier aux inconvénients des divers types connus d'installations.

Selon l'invention, un dispositif pour réguler l'épaisseur d'une paraison tubulaire en matière plastique, dans une machine d'extrusion, en modifiant la section d'un canal annulaire compris entre une filière et un noyau disposé au centre de cette filière, à l'aide de moyens pour provoquer un mouvement axial relatif entre la filière et le noyau afin d'obtenir ladite modification de section, dans lequel les moyens pour provoquer le mouvement axial comprennent un moteur électrique rotatif associé à des moyens pour réduire l'effort d'entraînement et transformer le mouvement de rotation du moteur en mouvement linéaire, afin de provoquer ledit mouvement axial relatif, est caractérisé en ce que les moyens pour réduire l'effort et transformer le mouvement de rotation en mouvement linéaire sont constitués par un coulisseau biseauté entraîné par le moteur, et en ce que la partie en biseau est engagée entre une partie fixe solidaire du châssis de la machine et une partie mobile solidaire de l'axe de déplacement relatif entre la filière et le noyau.

Ainsi, les efforts d'entraînement ne sont plus supportés par des pièces en rotation, mais par un biseau ou un coin, dont l'usinage est moins complexe que celui d'une vis. En outre, une telle pièce est beaucoup moins sensible à l'usure. L'angle du biseau détermine l'effort qui doit être appliqué par le moteur.

Selon une autre caractéristique, le coulisseau est dèplaçable selon une direction portée par un plan perpendiculaire à chacune des faces du biseau par l'intermédiaire d'une vis sans fin engagée dans un filetage ménagé dans le coulisseau, d'une part, et entraînée en rotation par le moteur, d'autre part.

Si une première face du biseau est perpendiculaire à l'axe de déplacement relatif entre la filière et le noyau, et que les deux faces font un angle α entre elles, c'est-à-dire que la seconde face est inclinée de 90° - α par rapport audit axe, alors, la force F qu'il convient d'appliquer dans une direction parallèle à la seconde face d'une part, et portée par le plan perpendiculaire aux deux faces du biseau d'autre part, pour déplacer une charge C, est donnée par la relation F = C * sin α, s'il n'est pas tenu compte des frottements.

Ainsi, par exemple, avec un biseau de 3°, l'effet réducteur est d'environ 19, c'est-à-dire qu'il faut appliquer une force de 1 000 DaN pour déplacer une charge de 19 000 DaN. En d'autres termes, une vis capable de supporter 1000 DaN suffit, là où, avec le dispositif selon DE-A-19528752, il aurait fallu une vis capable de supporter 19000 DaN.

Un autre avantage de l'invention est qu'il devient possible de provoquer le mouvement relatif entre les divers noyaux et filières d'une même machine avec un seul moteur.

A titre d'exemple, un seul moteur associé à une vis pouvant produire une force de 1 800 DaN sur un coulisseau avec un biseau de 3° peut entraîner trois noyaux ou filières subissant chacun une charge unitaire de 11 400 DaN (par exemple, trois filières dans lesquelles D1 = 6 cm, D2 = 12,5 cm et la pression est de 120 bars).

De préférence, c'est le noyau qui est entraîné ; alternativement, il pourrait être envisagé d'entraîner la filière, mais cela compliquerait sensiblement la réalisation de la machine.

D'autres caractéristiques et avantages de l'invention apparaîtront à la lecture de la description qui va suivre, faite en référence aux figures 2 à 5 ci-annexées, sur lesquelles :
- la figure 2 est un schéma de principe de côté d'un premier mode de réalisation de l'invention ;
- la figure 3 est une vue selon AA de la figure 2 ;
- la figure 4 est un schéma de principe d'un second mode de réalisation de l'invention ;
- la figure 5 est une vue selon BB de la figure 4.

Sur la figure 2, de façon connue, la tête comporte une filière 6 dans laquelle peut se déplacer axialement un noyau 7 pour modifier la largeur du canal annulaire 8 entre la filière 6 et le noyau 7 et, en conséquence, l'épaisseur de la paraison (non représentée) extrudée par cette tête.

Un canal 9 d'amenée de la matière plastique ramollie au travers de cette tête est relié à des moyens amont connus, non représentés, d'extrusion (vis d'extrusion, trémie d'alimentation en matière plastique, etc...).

En regard de la tête, et en dessous de celle-ci, se trouve un moule 10 pour la finition du corps creux.

De façon connue, le moule 10 est relié au châssis 11 par l'intermédiaire de moyens (non représentés) permettant son ouverture et sa fermeture en vue du soufflage des corps creux.

La filière 6 est portée par une autre partie du châssis 11.

Conformément à l'invention, le noyau 7 est relié au châssis 11 par l'intermédiaire de moyens lui permettant de se déplacer axialement par rapport à la filière 6 et ayant une fonction réductrice pour que la force nécessaire à leur déplacement soit inférieure à la charge exercée sur le noyau en raison de la pression de la matière plastique extrudée arrivant par le canal 9 d'amenée.

Dans l'exemple illustré, lesdits moyens sont constitués par un coulisseau 12 biseauté. Dans l'exemple, une face 13 du biseau est perpendiculaire à l'axe de déplacement du noyau, donc à l'axe de la filière ; la seconde face 14 du biseau est donc inclinée obliquement par rapport audit axe.

La première face 13 du biseau est portée par des patins dont un 15 est visible sur la figure. Ces patins sont fixés au châssis 11, de façon que la direction de translation du coulisseau sur ces patins soit portée par tout plan perpendiculaire aux deux faces du biseau.

En appui sur la seconde face 14 du biseau viennent des patins dont un 16 est visible sur la figure.

L'axe longitudinal de ces derniers patins 16 est également porté par une direction parallèle à tout plan perpendiculaire aux deux faces du biseau.

Ces patins 16 sont fixés à une platine 17 liée mécaniquement par une liaison 18 au noyau 7, d'une part, et guidée en translation verticale, par exemple par des tiges 19, 20, fixées au châssis 11 et passant par des trous de guidage 21, 22 ménagés dans la platine 17, d'autre part.

Ainsi, lorsque le coulisseau 12 est déplacé sur les patins 15 solidaires du châssis, il en résulte une translation verticale de la platine 17 et donc une montée ou une descente du noyau 7.

Alternativement, les patins 15,16 sont fixés au coulisseau, et glissent respectivement sur le châssis 11 et sur la platine 17.

Le sens de déplacement vertical est fonction du sens de déplacement du biseau, donc du coulisseau.

Ainsi, avec l'exemple de la figure 2 où la première face 13 du biseau est en partie basse du coulisseau (côté noyau) et où la platine 17 est donc au-dessus du coulisseau d'une part, et où le coulisseau est plus épais à droite qu'à gauche, d'autre part, alors un déplacement du coulisseau de gauche à droite provoque une descente du noyau ; inversement, un déplacement de droite à gauche en provoque la remontée.

L'entraînement du coulisseau s'effectue par l'intermédiaire d'une vis sans fin 23 disposée dans un alésage fileté 24 ménagé dans le corps du coulisseau 12. La vis est liée mécaniquement, soit directement, soit par un dispositif réducteur, à l'arbre d'un moteur rotatif 25, de préférence un moteur sans balai.

Dans l'exemple illustré, l'axe de la vis est disposé parallèlement à la seconde face 14 du coulisseau, d'une part, et est porté par le plan de symétrie du coulisseau perpendiculaire aux deux faces du biseau, d'autre part.

Dans ce cas, la force F de traction que doit exercer la vis pour déplacer le coulisseau est : F = C * sin α où C est la charge supportée par le noyau et α l'angle entre les deux faces du biseau. A titre indicatif, l'effet réducteur est de 19 pour un angle α de 3°. La course CC du coulisseau, quant à elle, détermine celle CN du noyau. (CN = CC * tan α).

Un autre avantage de l'invention, non mentionné auparavant, est qu'elle permet une très grande précision dans le positionnement relatif du noyau et de la filière. En effet, avec un biseau de 3°, disposé comme sur la figure 2, il faut déplacer le coulisseau de 19 cm pour: provoquer un déplacement vertical du noyau de 1 cm. Le déplacement du coulisseau est fonction du pas de la vis 23 sans fin et du nombre de tours effectué par cette dernière et, en conséquence, directement fonction du nombre de tours effectué par le moteur 25. Il est donc possible de parvenir à une grande précision dans le positionnement en comptant le nombre de tours ou de portions de tours effectué par le moteur et/ou par la vis pour passer d'une position à l'autre.

Avec les dispositifs de l'art antérieur, le positionnement du noyau était beaucoup plus délicat à réaliser. En effet, le noyau étant directement lié au vérin d'entraînement, une course du noyau de 1 cm correspondait à la même course du vérin. Il fallait donc réaliser une commande extrêmement précise, donc coûteuse, de chaque vérin.

Par ailleurs, en raison de l'emploi d'un dispositif ayant un effet réducteur, il est possible d'utiliser un seul moteur, et donc un seul coulisseau, pour déplacer plusieurs noyaux. A titre d'exemple, un ensemble vis, moteur dimensionné pour entraîner une charge de 2 000 daN, et accouplé à un coulisseau dont le biseau est de 3°, suffit pour entraîner une charge globale de 38 000 daN, soit par exemple deux noyaux subissant chacun une charge unitaire de 19 000 daN ou trois noyaux subissant chacun une charge unitaire d'un peu moins de 13 000 daN.

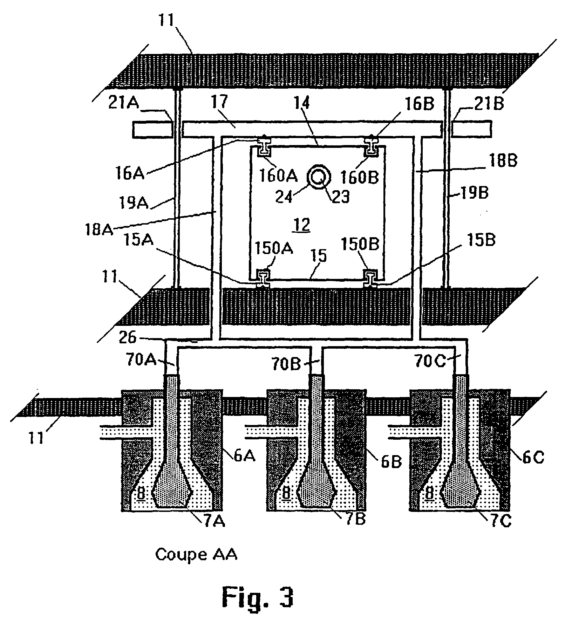

Cette possibilité est illustrée par la figure 3 qui montre, selon le plan de coupe AA de la figure 2, comment plusieurs noyaux 7A, 7B, 7C peuvent être entraînés relativement aux filières 6A, 6B, 6C par un coulisseau 12 disposé conformément à celui de la figure 2.

Afin de simplifier la compréhension de la figure, les mêmes éléments portent les mêmes références.

La face inférieure 15 du coulisseau 12 est guidée en translation sur le châssis 11 grâce à des patins 15A, 15B montés sur le châssis 11.

Afin que le coulisseau soit guidé selon une direction précise, les patins 15A, 15B sont profilés et soit le coulisseau est pourvu de rainures 150A, 150B usinées pour épouser le profil des patins, soit des pièces intermédiaires usinées pour épouser le profil des patins sont intercalées entre les patins et le coulisseau, en étant fixées à ce dernier.

Dans une variante, les patins 15A, 15B sont fixés au coulisseau 12 et le châssis 11 est soit usiné, soit pourvu de pièces intermédiaires usinées pour épouser le profil des patins.

La face supérieure 14 du coulisseau 12 est mise en glissement relatif avec la platine 17 par l'intermédiaire de patins 16A, 16B. De préférence, ces derniers sont, comme les patins 15A, 15B, profilés, afin de permettre un coulissement selon une direction précise.

Comme les patins 15A, 15B, les patins 16A, 16B peuvent être fixés à la platine 17 : dans ce cas, le coulisseau est pourvu de rainures 160A, 160B usinées pour épouser le profil des patins ; alternativement, des pièces intermédiaires, usinées pour épouser le profil des patins sont fixées à la platine 17.

Dans une variante, les patins 16A, 16B sont fixés au coulisseau et la platine 17 est alors soit usinée de façon complémentaire, soit pourvue de pièces intermédiaires ayant un profil complémentaire de celui des patins.

La platine 17 est guidée dans une direction verticale, parallèle à celle de déplacement des noyaux, donc verticale. dans l'exemple illustré, par des tiges, dont deux 19A, 19B sont visibles sur cette figure. Ces tiges sont fixées au châssis et coulissent dans des orifices 21A, 21B de guidage ménagés dans la platine.

Alternativement, les tiges de guidage sont fixes par rapport à la platine 17 et coulissent dans des trous de guidage ménagés dans le châssis.

La platine 17 est reliée aux éléments qu'elle entraîne, ici trois noyaux 7A, 7B, 7C, par l'intermédiaire de pièces formant avec cette platine une armature, en forme de cadre, de support desdits noyaux.

Hormis la platine 17, l'armature comporte, dans l'exemple illustré par cette figure 3, deux bras ou entretoises latéraux 18A, 18B par exemple parallèles entre eux et orientés selon une direction parallèle à l'axe d'entraînement des noyaux 7A, 7B, 7C.

Les bras sont disposés de part et d'autre du coulisseau. L'une de leurs extrémités est fixée à la platine 17, l'autre à une barre 26 à laquelle sont fixés les noyaux 7A, 7B, 7C, soit directement, soit par l'intermédiaire de pièces de liaison en forme de tiges 70A, 70B, 70C comme illustré sur la figure 3.

La structure des figures 2 et 3 présente l'avantage que le coulisseau 12 agit comme un coin empêchant la descente des noyaux sous l'effet de la pression de la matière dans les filières. Les efforts transmis par les noyaux sont appliqués directement sur la face supérieure 14 du biseau par l'intermédiaire de l'armature en forme de cadre. Il en résulte que l'usinage du profil des patins 15A, 15B, 16A, 16B peut être simplifié puisque, dans ce cas, les patins ont seulement pour fonction de permettre le guidage du coulisseau en vue de la montée ou de la descente de la platine, le mouvement descendant s'effectuant sous l'effet de la pression dans les filières lorsque le coulisseau est déplacé dans le sens approprié (de la gauche vers la droite sur la figure 2).

Cependant, cette structure est relativement lourde à réaliser et est encombrante : il faut prévoir l'emplacement de l'armature qui déborde de part et d'autre du coulisseau, prévoir le passage des bras de liaison, etc...

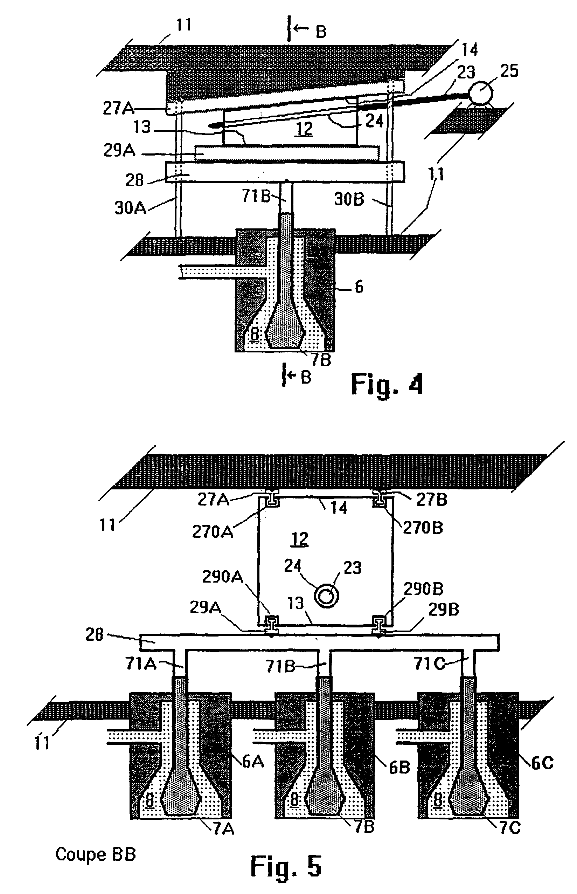

C'est pourquoi on préfère la structure représentée sur les figures 4 et 5 qui ne nécessite plus la réalisation d'un tel cadre débordant.

Cette fois-ci, le coulisseau 12 n'est plus supporté par le châssis 11 de l'installation, mais est suspendu à celui-ci par l'intermédiaire de patins 27A, 27B ayant un profil approprié, et coopérant avec sa face supérieure 14.

Dans le mode de réalisation préféré illustré sur ces figures, les patins 27A, 27B sont fixés au châssis 11, et la face supérieure 14 du coulisseau 12 est pourvue d'usinages 270A, 270B, ou de pièces rapportées usinées ayant un profil complémentaire de celui des patins 27A, 27B. Le profil des patins 27A, 27B et celui, complémentaire, des usinages ou pièces rapportées usinées 270A, 270B, est tel que les patins et usinages ou pièces rapportées assurent la suspension et le glissement du coulisseau 12 par rapport au châssis 11.

De préférence, comme visible sur la figure 4, les patins 27A, 27B font, avec le plan horizontal, un angle égal à celui entre les deux faces 13, 14 du biseau formé par le coulisseau 12, de sorte que la face inférieure 13 du biseau est horizontale. Cette disposition permet de réduire au minimum les contraintes horizontales appliquées sur la structure entraînée par le biseau pour permettre la montée ou la descente des noyaux.

Comme dans le cas des figures 2 et 3, le coulisseau 12 est translaté sur les patins 27A, 27B par un ensemble constitué par un moteur 25 et une vis sans fin 23.

Ainsi, lorsque le coulisseau 12 est déplacé vers la droite sur la figure 4, sa face inférieure 13 monte ; lorsqu'il est déplacé vers la gauche, la même face descend.

La montée ou la descente des noyaux est assurée comme visible sur ces mêmes figures 4 et 5, par la structure décrite ci-après, associée au coulisseau 12.

La structure d'entraînement des noyaux 7A, 7B, 7C comprend une platine 28 à laquelle sont fixés les noyaux 7A, 7B, 7C directement ou, comme visible sur la figure 5, par l'intermédiaire de tiges 71A, 71B, 71C de liaison. Chaque noyau est associé à une filière 6A, 6B, 6C.

A la platine 28 sont fixés des patins 29A, 29B engagés dans des profils complémentaires 290A, 290B usinés sur la face inférieure 13 du coulisseau ou constitués par des pièces rapportées fixées à ladite face.

La forme des patins 29A, 29B et des profils complémentaires 290A, 290B est telle que le coulisseau porte la platine 28. Par ailleurs, des moyens de guidage sont prévus pour que la platine 28 soit translatée selon une direction parallèle à celle du déplacement des noyaux 7A, 7B, 7C, donc verticale dans l'exemple illustré.

Ces moyens sont constitués par des guides verticaux 30 A, 30B entre la platine 28 et le châssis 11.

Dans une variante ou de façon complémentaire, le guidage en translation verticale est assuré par les tiges 71A, 71B, 71C intercalées entre la platine et les noyaux.

Il est bien entendu que la description qui vient d'être faite n'est pas limitative. Elle embrasse toutes les variantes entrant dans le cadre défini par les revendications.

## Revendications

1. Dispositif pour réguler l'épaisseur d'une paraison tubulaire en matière plastique, dans une machine d'extrusion, en modifiant la section d'un canal annulaire compris entre une filière (6 ; 6A ; 6B ; 6C) et un noyau (7 ; 7A ; 7B ; 7C) disposé au centre de la filière, à l'aide de moyens pour provoquer un mouvement axial relatif entre la filière et le noyau afin d'obtenir ladite modification de section, dans lequel les moyens pour provoquer le mouvement axial comprennent un moteur électrique (25) rotatif associé à des moyens (12) pour réduire l'effort d'entraînement et transformer le mouvement de rotation du moteur (25) en mouvement linéaire afin de provoquer ledit mouvement axial relatif, **caractérisé en ce que** les moyens pour réduire l'effort d'entraînement et transformer le mouvement de rotation du moteur en mouvement linéaire sont constitués par un coulisseau (12) biseauté entraîné par le moteur, **en ce que** la partie biseautée du coulisseau est engagée entre une partie fixe solidaire du châssis (11) de la machine et une partie mobile (17, 18A, 18B, 26, 70A, 70B, 70C ; 28, 71A, 71B, 71C) solidaire de l'axe de déplacement relatif entre la filière et le noyau.

2. Dispositif selon la revendication 1, **caractérisé en ce que** le coulisseau (12) entraîne au moins un noyau (7 ; 7A ; 7B ; 7C).

3. Dispositif selon la revendication 1, **caractérisé en ce que** le coulisseau (12) entraîne au moins une filière (6 ; 6A ; 6B ; 6C).

4. Dispositif selon l'une des revendications précédentes, **caractérisé en ce que** le coulisseau (12) est déplaçable selon une direction portée par un plan perpendiculaire à chacune des faces du biseau par l'intermédiaire d'une vis (23) sans fin engagée dans un filetage (24) ménagé dans le coulisseau, d'une part, et entraînée en rotation par le moteur (25), d'autre part.

5. Dispositif selon l'une des revendications 1 à 4, **caractérisé en ce qu'**une face (13) du biseau est perpendiculaire à l'axe de déplacement relatif entre la filière et le noyau. .

6. Dispositif selon la revendication 5, **caractérisé en ce que** la face (13) perpendiculaire à l'axe de déplacement est la face inférieure du coulisseau.

7. Dispositif selon l'une des revendications 1 à 6, **caractérisé en ce que** le déplacement du coulisseau relativement au châssis est assuré à l'aide de premiers patins (15 ; 15A ; 15B ; 27A ; 27B) permettant un glissement relatif entre l'une des faces du biseau et le châssis et **en ce que** des seconds patins (16 ; 16A ; 16B ; 29A ; 29B) sont disposés entre l'autre face du biseau et la partie mobile solidaire de l'axe de déplacement relatif entre la filière et le noyau.

8. Dispositif selon la revendication 7, caractérisé en qu'une platine (17 ; 28) est intercalée entre les seconds patins et la partie mobile solidaire de l'axe de déplacement relatif entre la filière et le noyau, et constitue l'un des éléments de ladite partie mobile.

9. Dispositif selon la revendication 8, **caractérisé en ce que** des moyens de guidage (19, 20, 21, 22, 30A, 30B, 71A, 71B, 71C) sont prévus pour permettre la translation de la platine (17, 28) selon une direction parallèle à l'axe de déplacement relatif entre la filière et le noyau.

10. Dispositif selon la revendication 9, **caractérisé en ce que** les moyens de guidage sont constitués par des tiges (19, 20, 71A, 71B, 71C) coulissant dans des orifices de guidage (21, 22).

11. Dispositif selon la revendication 10 **caractérisé en ce que** les tiges sont fixées au châssis (11) et les orifices sont ménagés dans la platine (17).

12. Dispositif selon la revendication 10, **caractérisé en ce que** les tiges sont fixées à la platine, et les orifices sont ménagés dans le châssis.

13. Dispositif selon l'une des revendications 1 à 12, **caractérisé en ce que** la face du biseau en relation de coulissement avec le châssis est située du côté de la filière et du noyau, et la partie mobile solidaire de l'axe de déplacement relatif entre la filière et le noyau comporte une armature (17, 18A, 18B, 26) entraînée par la face opposée du biseau.

14. Dispositif selon l'une des revendications 1 à 12, **caractérisé en ce que** la partie mobile (28, 71A, 71B, 71C) solidaire de l'axe de déplacement relatif entre la filière et le noyau est solidaire en glissement de la face du biseau située du côté de la filière et du noyau.

15. Dispositif selon l'une des revendications 1 à 14, **caractérisé en ce qu'**il provoque le mouvement de translation d'au moins deux noyaux (7A, 7B, 7C) liés mécaniquement l'un à l'autre.

16. Dispositif selon l'une des revendications 1 à 14, **caractérisé en ce qu'**il provoque le mouvement de translation d'au moins deux filières (6A, 6B, 6C) liées mécaniquement l'une à l'autre.

17. Machine d'extrusion de paraisons tubulaires, **caractérisée en ce qu'**elle comporte un dispositif selon l'une des revendications 1 à 16.

## Claims

1. Device for regulating the thickness of a tubular plastic parison in an extrusion machine, by modifying the cross section of an annular channel lying between a die (6; 6A; 6B; 6C) and a core (7; 7A; 7B; 7C) placed at the centre of the die, using means for causing relative axial movement between the die and the core so as to obtain the said modification in cross section, in which device the means for causing the axial movement comprise a rotary electric motor (25) associated with means (12) for reducing the drive force and for converting the rotational movement of the motor (25) into a linear movement so as to cause the said relative axial movement, **characterized in that** the means for reducing the drive force and for converting the rotational movement of the motor into a linear movement consist of a bevelled slide (12) driven by the motor and **in that** the bevelled part of the slide is engaged between a fixed part fastened to the frame (11) of the machine and a moving part (17, 18A, 18B, 26, 70A, 70B, 70C; 28, 71A, 71B, 71C) fastened to the pin for relative displacement between the die and the core.

2. Device according to Claim 1, **characterized in that** the slide (12) drives at least one core (7; 7A; 7B; 7C).

3. Device according to Claim 1, **characterized in that** the slide (12) drives at least one die (6; 6A; 6B; 6C).

4. Device according to one of the preceding claims, **characterized in that** the slide (12) can move in a direction carried by a plane perpendicular to each of the faces of the bevel by means of a worm (23) which, at one end, is engaged in a screw thread (24) provided in the slide and, at the other end, is driven in rotation by the motor (25).

5. Device according to one of Claims 1 to 4, **characterized in that** one face (13) of the bevel is perpendicular to the pin for relative displacement between the die and the core.

6. Device according to Claim 5, **characterized in that** the face (13) perpendicular to the displacement pin is the lower face of the slide.

7. Device according to one of Claims 1 to 6, **characterized in that** the displacement of the slide relative to the frame is provided by means of first runners (15; 15A; 15B; 27A; 27B) that allow relative sliding between one of the faces of the bevel and the frame, and **in that** second runners (16; 16A; 16B; 29A; 29B) are placed between the other face of the bevel and the moving part fastened to the pin for relative displacement between the die and the core.

8. Device according to Claim 7, **characterized in that** a support plate (17; 28) is inserted between the second runners and the moving part fastened to the pin for relative displacement between the die and the core, and forms one of the elements of the said moving part.

9. Device according to Claim 8, **characterized in that** guiding means (19, 20, 21, 22, 30A, 30B, 71A, 71B, 71C) are provided in order to allow the support plate (17, 28) to move translationally in a direction parallel to the pin for relative displacement between the die and the core.

10. Device according to Claim 9, **characterized in that** the guiding means consist of rods (19, 20, 71A, 71B, 71C) that slide in guiding orifices (21, 22).

11. Device according to Claim 10, **characterized in that** the rods are fastened to the frame (11) and the orifices are made in the support plate (17).

12. Device according to Claim 10, **characterized in that** the rods are fixed to the support plate and the orifices are made in the frame.

13. Device according to one of Claims 1 to 12, **characterized in that** that face of the bevel in sliding relationship with the frame is located on the same side as the die and the core, and the moving part fastened to the pin for relative displacement between the die and the core has a reinforcement (17, 18A, 18B, 26) driven by the opposite face of the bevel.

14. Device according to one of Claims 1 to 12, **characterized in that** the moving part (28, 71A, 71B, 71C) fastened to the pin for relative displacement between the die and the core is integral, slidingwise, with that face of the bevel which is on the same side as the die and the core.

15. Device according to one of Claims 1 to 14, **characterized in that** it causes the translational movement of at least two cores (7A, 7B, 7C) mechanically linked together.

16. Device according to one of Claims 1 to 14, **characterized in that** it causes the translational movement of at least two dies (6A, 6B, 6C) mechanically linked together.

17. Machine for extruding tubular parisons, **characterized in that** it includes a device according to one of Claims 1 to 16.

## Patentansprüche

1. Vorrichtung zur Regelung der Dicke eines rohrförmigen Vorformlings aus Kunststoff in einer Extrudiermaschine, indem der Querschnitt eines ringförmigen Kanals zwischen einem Spritzmundstück (6; 6A; 6B; 6C) und einem Kern (7; 7A; 7B; 7C), der in der Mitte des Spritzmundstücks angeordnet ist, modifiziert wird mittels Mitteln zum Hervorrufen einer axialen Relativbewegung zwischen dem Spritzmundstück und dem Kern, um die Querschnittsmodifikation zu erzielen, wobei die Mittel zum Hervorrufen der axialen Bewegung einen drehenden Elektromotor (25) umfassen, der mit Mitteln (12) verbunden ist, um die Antriebskraft zu reduzieren und die Drehbewegung des Motors (25) in eine Linearbewegung umzuwandeln, um die axiale. Relatifbewegung hervorzurufen, **dadurch gekennzeichnet,. dass** die Mittel zum Reduzieren der Antriebskraft und zum Transformieren der Drehbewegung des Motors in eine Linearbewegung aus einem von dem Motor angetriebenen, abgeschrägten Schlitten (12) bestehen, dass der abgeschrägte Teil des Schlittens zwischen ein feststehendes, mit dem Rahmen (11) der Maschine kraftschlüssiges Teil und ein bewegliches, mit der Achse der Relativbewegung zwischen dem Spritzmundstück und dem Kern kraftschlüssiges Teil (17, 18A, 18B, 26, 70A, 70B, 70C; 28, 71A, 71B, 71C) eingreift.

2. Vorrichtung nach Anspruch 1, **dadurch gekennzeichnet, dass** der Schlitten (12) zumindest einen Kern (7; 7A; 7B; 7C) antreibt.

3. Vorrichtung nach Anspruch 2, **dadurch gekennzeichnet, dass** der Schlitten (12) zumindest ein Spritzmundstück (6; 6A; 6B; 6C) antreibt.

4. Vorrichtung nach einem der vorhergehenden Ansprüche, **dadurch gekennzeichnet, dass** der Schlitten (12) mittels einer Endlosschraube (23), die einerseits in ein Gewinde (24) eingreift, das in dem Schlitten (12) ausgebildet ist, und andererseits durch den Motor (25) in Drehung versetzt wird, längs einer Richtung verschiebbar ist, die in einer Ebene senkrecht zu jeder der Flächen der Abschrägung liegt,.

5. Vorrichtung nach einem der Ansprüche 1 bis 4, **dadurch gekennzeichnet, dass** eine Fläche (13) der Abschrägung senkrecht zur Achse der Relativbewegung zwischen dem Spritzmundstück und dem Kern liegt.

6. Vorrichtung nach Anspruch 5, **dadurch gekennzeichnet, dass** die Fläche (13) senkrecht zur Bewegungsachse die Unterseite des Schlittens ist.

7. Vorrichtung nach einem der Ansprüche 1 bis 6, **dadurch gekennzeichnet, dass** für die Verschiebung des Schlittens relativ zum Rahmen mittels erster Gleitschienen (15; 15A; 15B; 27A; 27B) gesorgt wird, die ein relatives Gleiten zwischen einer der Flächen der Abschrägung und dem Rahmen gestatten, und dass zweite Gleitschienen (16; 16A; 16B; 29A; 29B) zwischen der anderen Fläche der Abschrägung und dem beweglichen, mit der Achse der Relativbewegung zwischen dem Spritzmundstück und dem Kern kraftschlüssigen Teil angeordnet sind.

8. Vorrichtung nach Anspruch 7, **dadurch gekennzeichnet, dass** eine Platte (17; 28) zwischen den zweiten Gleitschienen und dem beweglichen, mit der Achse der Relativbewegung zwischen dem Spritzmundstück und dem Kern kraftschlüssigen Teil eingeschoben ist und eines der Elemente des beweglichen Teils bildet.

9. Vorrichtung nach Anspruch 8, **dadurch gekennzeichnet, dass** Führungsmittel (19, 20, 21, 22, 30A, 30B, 71A, 71B, 71C) vorgesehen sind, um die Translation der Platte (17, 28) in eine zu der Achse der Relativbewegung zwischen dem Spritzmundstück und dem Kern parallele Richtung zu gestatten.

10. Vorrichtung nach Anspruch 9, **dadurch gekennzeichnet, dass** die Führungsmittel aus Stangen (19, 20, 71A, 71B, 71C) bestehen, die in Führungsöffnungen (21, 22) gleiten.

11. Vorrichtung nach Anspruch 10, **dadurch gekennzeichnet, dass** die Stangen am Rahmen (11) befestigt sind und die Öffnungen in der Platte (17) ausgebildet sind.

12. Vorrichtung nach Anspruch 10, **dadurch gekennzeichnet, dass** die Stangen an der Platte befestigt sind, und die Öffnungen im Rahmen ausgebildet sind.

13. Vorrichtung nach einem der Ansprüche 1 bis 12, **dadurch gekennzeichnet, dass** die Fläche der Abschrägung, die in Gleitbeziehung zum Rahmen steht, auf der Seite des Spritzmundstücks und des Kerns liegt, und der bewegliche, mit der Achse der Relativbewegung zwischen dem Spritzmundstück und dem Kern kraftschlüssige Teil ein Gestell (17, 18A, 18B, 26) umfasst, das von der gegenüberliegenden Seite der Abschrägung angetrieben wird.

14. Vorrichtung nach einem der Ansprüche 1 bis 12, **dadurch gekennzeichnet, dass** das bewegliche, mit der Achse der Relativbewegung zwischen dem Spritzmundstück und dem Kern kraftschlüssige Teil (28, 71A, 71B, 71C) im Gleiten kraftschlüssig mit der Fläche der Abschrägung ist, die auf der Seite des Spritzmundstücks und des Kerns liegt.

15. Vorrichtung nach einem der Ansprüche 1 bis 14, **dadurch gekennzeichnet, dass** sie die Translationsbewegung zumindest zweier mechanisch miteinander verbundener Kerne (7a, 7B, 7C) hervorruft.

16. Vorrichtung nach einem der Ansprüche 1 bis 14, **dadurch gekennzeichnet, dass** sie die Translationsbewegung zumindest zweier mechanisch miteinander verbundener Spritzmundstücke (6A, 6B, 6C) hervorruft.

17. Maschine zum Extrudieren rohrförmiger Vorformlinge, **dadurch gekennzeichnet, dass** sie eine Vorrichtung nach einem der Ansprüche 1 bis 16 umfasst.
